# EUROPEAN PATENT APPLICATION

(11) **EP 4 615 134 A1**
(43) Date of publication of application: **10.09.2025**
(21) Application number: 23884851.9
(22) Date of filing: 30.10.2023
(51) Int. Cl.: H04W 74/08, H04W 72/25, H04W 76/14

(54) **PROCESSING METHOD AND APPARATUS FOR CONSISTENT LISTEN BEFORE TALK (LBT) FAILURE, AND USER EQUIPMENT AND STORAGE MEDIUM**

(30) Priority: 04.11.2022 CN 202211380095
(71) Applicant: Vivo Mobile Communication Co., Ltd., Dongguan, Guangdong 523863 (CN)
(72) Inventor: LI, Jianhui, Dongguan, Guangdong 523863 (CN); ZHENG, Qian, Dongguan, Guangdong 523863 (CN); LIANG, Jing, Dongguan, Guangdong 523863 (CN); XIAO, Xiao, Dongguan, Guangdong 523863 (CN)
(74) Representative: Walaski, Jan Filip
(86) International application number: PCT/CN2023/127788
(87) International publication number: WO 2024/093921

(57) **Abstract**

The present application belongs to the technical field of communications. Disclosed are a processing method and apparatus for a consistent listen before talk (LBT) failure, and a user equipment and a storage medium. The processing method for a consistent LBT failure in the embodiments of the present application comprises: a first user equipment triggering a sidelink consistent LBT failure, and when a first condition is met, canceling the sidelink consistent LBT failure (200), wherein the first condition is a condition for determining whether the cancellation of the sidelink consistent LBT failure is met.

## Description

### CROSS-REFERENCE TO RELATED APPLICATIONS

This application claims priority to Chinese Patent Application No. 202211380095.5, filed in China on November 4, 2022, which is incorporated herein by reference in its entirety.

### TECHNICAL FIELD

This application pertains to the field of communication technologies, and specifically relates to a method and an apparatus for processing a consistent LBT failure, a terminal, and a storage medium.

### BACKGROUND

In a new radio-unlicensed spectrum (New Radio-Unlicensed Spectrum, NR-U), a terminal (User Equipment, UE) needs to listen before talk (Listen Before Talk, LBT) when accessing a channel in the unlicensed spectrum. When traffic in the unlicensed spectrum is heavy, the UE may encounter an LBT failure. Based on an LBT recovery parameter configuration configured by a network, the UE needs to determine when to trigger a consistent listen before talk failure (consistent LBT failure). After the consistent LBT failure is triggered, the UE further needs to determine when to cancel the consistent LBT failure. In a sidelink-unlicensed spectrum (sidelink-unlicensed, SL-U), SL UE also needs to determine under what conditions to cancel a sidelink consistent LBT failure.

### SUMMARY

Embodiments of this application provide a method and an apparatus for processing a consistent LBT failure, a terminal, and a storage medium to resolve a problem that SL UE determines under what conditions to cancel a sidelink consistent LBT failure.

According to a first aspect, a method for processing a consistent LBT failure is provided and applied to a first terminal. The method includes:
triggering, by a first terminal, a sidelink consistent listen before talk LBT failure, and in a case that a first condition is met, canceling the sidelink consistent LBT failure, where
the first condition is used to determine whether a condition for canceling the sidelink consistent LBT failure is met.

According to a second aspect, an apparatus for processing a consistent LBT failure is provided and includes:
a processing unit, configured to trigger a sidelink consistent listen before talk LBT failure, and in a case that a first condition is met, cancel the sidelink consistent LBT failure, where
the first condition is used to determine whether a condition for canceling the sidelink consistent LBT failure is met.

According to a third aspect, a terminal is provided. The terminal includes a processor and a memory. The memory stores a program or instructions capable of running on the processor. When the program or instructions are executed by the processor, the steps of the method for processing a consistent LBT failure according to the first aspect are implemented.

According to a fourth aspect, a terminal is provided and includes a processor and a communication interface. The processor is configured to trigger a sidelink consistent listen before talk LBT failure, and in a case that a first condition is met, cancel the sidelink consistent LBT failure, where
the first condition is used to determine whether a condition for canceling the sidelink consistent LBT failure is met.

According to a fifth aspect, a communication system is provided and includes a first terminal. The first terminal may be configured to perform the steps of the method for processing a consistent LBT failure according to the first aspect.

According to a sixth aspect, a readable storage medium is provided. The readable storage medium stores a program or instructions. When the program or instructions are executed by a processor, the steps of the method for processing a consistent LBT failure according to the first aspect are implemented.

According to a seventh aspect, a chip is provided. The chip includes a processor and a communication interface. The communication interface is coupled to the processor. The processor is configured to run a program or instructions to implement the method for processing a consistent LBT failure according to the first aspect.

According to an eighth aspect, a computer program or program product is provided. The computer program or program product is stored in a storage medium. The computer program or program product is executed by at least one processor to implement the steps of the method for processing a consistent LBT failure according to the first aspect.

In the embodiments of this application, the terminal triggers the sidelink consistent listen before talk LBT failure, and in the case that the first condition is met, cancels the sidelink consistent LBT failure. Because the condition for canceling the sidelink consistent LBT failure by the terminal in SL-U is provided, the terminal can cancel the sidelink consistent LBT failure in a timely manner when the condition for canceling the sidelink consistent LBT failure is met, and resource utilization of the terminal is improved.

### BRIEF DESCRIPTION OF DRAWINGS

FIG. 1 is a block diagram of a wireless communication system to which an embodiment of this application may be applied;
FIG. 2 is a schematic flowchart of a method for processing a consistent LBT failure according to an embodiment of this application;
FIG. 3 is a schematic diagram of a structure of an apparatus for processing a consistent LBT failure according to an embodiment of this application;
FIG. 4 is a schematic diagram of a structure of a communication device according to an embodiment of this application; and
FIG. 5 is a schematic diagram of a hardware structure of a first terminal for implementing an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communication system.

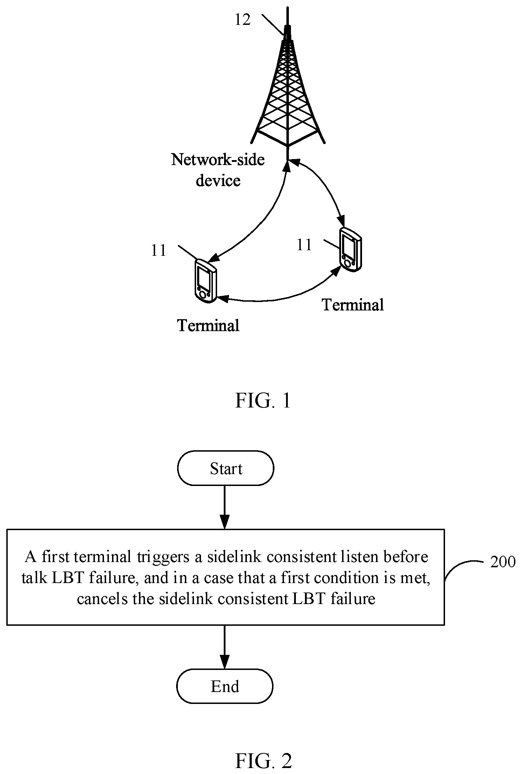

FIG. 1 is a block diagram of a wireless communication system to which an embodiment of this application may be applied. The wireless communication system includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), vehicle user equipment (VUE), pedestrian user equipment (PUE), a smart home (a home device having a wireless communication function, such as a refrigerator, a television, a washing machine, or furniture), a game console, a personal computer (personal computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. It should be noted that a specific type of the terminal 11 is not limited in the embodiments of this application. The network-side device 12 may include an access network device or a core network device. The access network device may also be referred to as a radio access network device, a radio access network (Radio Access Network, RAN), a radio access network function, or a radio access network element. The access network device may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmission and Reception Point, TRP), or another appropriate term in the art. As long as the same technical effect is achieved, the base station is not limited to specific technical terms. It should be noted that in the embodiments of this application, only a base station in an NR system is used as an example for description, but a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), or the like. It should be noted that in the embodiments of this application, only a core network device in the NR system is used as an example for description, but a specific type of the core network device is not limited.

The following first describes the related art in this application.

### I. Consistent LBT failure canceling in NR-U

In NR-U, UE needs to perform LBT when accessing a channel in an unlicensed spectrum. When traffic in the unlicensed spectrum is heavy, the UE may encounter an LBT failure. Based on an LBT recovery parameter configuration configured by a network, the UE needs to determine when to trigger a consistent listen before talk failure (consistent LBT failure). After triggering the consistent LBT failure, the UE further needs to determine when to cancel the consistent LBT failure. After the UE triggers the consistent LBT failure, the UE cancels the consistent LBT failure after reporting the consistent LBT failure to the network, or after completing random access or meeting other conditions. This means that the UE subsequently does not need to perform any other action for this canceled consistent LBT failure.

The UE cancels the consistent LBT failure in the following cases:
1. No LBT failure indication is received from a lower layer, and a media access control (Media Access Control, MAC) protocol data unit (Protocol Data Unit, PDU) is sent, and the MAC PDU includes an LBT failure media access control control element (Media Access Control Control Element, MAC CE).
2. For secondary cell(s) (Secondary Cell(s), SCell(s)) in which a consistent LBT failure is indicated by an LBT failure MAC CE, the consistent LBT failure in the SCell(s) is canceled.
3. If a consistent LBT failure is triggered in an SpCell (Special Cell, that is, a primary cell (Primary Cell, PCell) or a primary secondary cell (Primary Secondary Cell, PSCell)) and is not canceled, and it is considered that a random access procedure has been successfully completed in the SpCell, all consistent LBT failures in the SpCell are canceled.
4. If an upper layer reconfigures an LBT failure recovery configuration information element for a serving cell, all consistent LBT failures in the serving cell are canceled.
5. If an sCellDeactivationTimer of an activated SCell expires, if there is any triggered consistent LBT failure in the serving cell, the consistent LBT failure is canceled.
6. If the upper layer requests to reset a MAC entity, if there is any triggered consistent LBT failure, the MAC entity cancels the LBT failure.
7. If the MAC entity receives a physical downlink control channel (Physical Downlink Control Channel, PDCCH) indicating switching of a bandwidth part (Bandwidth Part, BWP) of a serving cell, the MAC entity will:
   if there is no ongoing random access procedure in the serving cell, or if an ongoing random access procedure of the serving cell is successfully completed when a PDCCH scrambled by a cell radio network temporary identifier (Cell Radio Network Temporary Identifier, C-RNTI) is received, and if there is any triggered consistent LBT failure in the serving cell, cancel the consistent LBT failure.

### II. Channel access priority class (Channel access priority class, CAPC) in NR-U

Before preempting a channel, an eNB/gNB/UE needs to determine a CAPC value, and look up Table 1 accordingly to determine LBT window parameters for channel access. The CAPC value is p = 1 to 4, where p = 1 represents a highest priority, and a corresponding LBT window is shorter than those with other priorities, that is, a time required for successful LBT with p = 1 is shorter than that with p = 2/3/4 on average. However, a maximum channel occupancy time (channel occupancy time, COT) length that can be occupied is also relatively short, which reflects fairness of channel preemption by different devices to some extent.

**Table 1 CAPC**

| CAPC (p) | *mₚ* | *CW_{min,p}* | *CW_{max,p}* | *T_{m cot, p}* | Allowed *CWₚ* size |
|---|---|---|---|---|---|
| 1 | 1 | 3 | 7 | 2 ms | {3, 7} |
| 2 | 1 | 7 | 15 | 3 ms | {7, 15} |
| 3 | 3 | 15 | 63 | 8 or 10 ms | {15, 31, 63} |
| 4 | 7 | 15 | 1023 | 8 or 10 ms | {15, 31, 63, 127, 255, 511, 1023} |

For *p* = 3 and *p* = 4, if it can be ensured that no other RAT will share this channel in the long term (for example, restricted by laws and regulations), *T_{m cot, p}*=10*ms*; otherwise, *T_{m cot,p}*=8*ms.*

When the UE needs to perform LBT to send uplink data, the UE needs to determine a CAPC value of this LBT based on a type of the data to be sent, as specified in a protocol or configured by the network. When the data to be sent by the UE includes data carried by a signaling radio bearer SRB 0, SRB 1, or SRB 3, p = 1 is always used by default. For SRB 2 or a data radio bearer (Data Radio Bearer, DRB), the network side may configure a CAPC value for the UE to send data carried by SRB 2 or the DRB.

### III. NR-U multi-slot

In NR-U, a base station may schedule multiple consecutive slot resources (multi-slot resources) for the UE by using a downlink control information (Downlink Control Information, DCI) format 0_1, for uplink transmission by the UE. The UE may determine, by using the DCI format 0_1, a CAPC value used when the multi-slot resources are used for transmission.

### IV. SL resource allocation mode

SL UE supports two resource allocation modes: mode 1 and mode 2, where mode 1 is that a base station schedules a resource, and mode 2 is that the UE itself determines a resource to be used for transmission. Resource information may come from a broadcast message of the base station or preconfigured information. If the LTE works within coverage of the base station and has a radio resource control (Radio Resource Control, RRC) connection to the base station, the LTE may work in mode 1 and/or mode 2; or if the LTE works within coverage of the base station, but has no RRC connection to the base station, the UE can work only in mode 2. If the UE is beyond coverage of the base station, the UE can work only in mode 2 and perform SL transmission based on the preconfigured information.

For mode 2, a specific working mode is as follows: (1) After resource selection is triggered, TX UE first determines a resource selection window, where a lower boundary of the resource selection window is at a time T1 after the triggering of the resource selection window, an upper boundary of the resource selection is at a time T2 after the triggering, T2 is a value selected by the UE implementation in a packet delay budget (packet delay budget, PDB) of a transport block (Transport Block, TB) of the UE, and T2 is not earlier than T1. (2) Before the resource selection, the UE needs to determine a candidate resource set (candidate resource set) for the resource selection by comparing reference signal received power (Reference Signal Received Power, RSRP) measured on a resource within the resource selection window with a corresponding RSRP threshold. If the RSRP is lower than the RSRP threshold, the resource may be included into the candidate resource set. (3) After the resource set is determined, the UE randomly selects a transmission resource from the candidate resource set. In addition, the UE may reserve a transmission resource in current transmission for subsequent transmission.

An NR SL supports a chained resource reservation mode. In other words, one piece of sidelink control information (Sidelink Control Information, SCI) may indicate that a maximum of two resources can be additionally reserved in addition to a current transmission resource, and that a maximum of three resources can be additionally reserved in a next resource period. In the selection window, resources may be continuously reserved in a dynamic reservation mode.

In SL-U, the SL UE also needs to determine under what conditions to cancel a sidelink consistent LBT failure. However, due to the following reasons, conditions for canceling a consistent LBT failure by the UE in NR-U cannot be directly reused in SL-U.
1. The resource allocation modes for the SL UE are classified into mode 1 and mode 2.
2. SL UE in an RRC connected state may encounter mode switching between mode 1 and mode 2.
3. An SL resource granularity is different from an NR resource granularity, and issues related to SL resource selection are usually discussed with a resource pool (resource pool) as a resource granularity.
4. The SL UE not only has a Uu interface with a base station, but also has a separate PC5 interface with other UE.
5. During unicast transmission between SL UEs, a PC5 RRC link is established.

In conclusion, the conditions for canceling the sidelink consistent LBT failure by the UE in SL-U need to be redesigned separately.

A core idea of this application is to comprehensively describe conditions for canceling a sidelink consistent LBT failure by SL UE, from perspectives of consistent LBT failure recovery, SL-U resource configuration, SL mode switching, and the like.

A method for processing a consistent LBT failure according to embodiments of this application is hereinafter described in detail by using some embodiments and application scenarios thereof with reference to the accompanying drawings.

FIG. 2 is a schematic flowchart of a method for processing a consistent LBT failure according to an embodiment of this application. As shown in FIG. 2, the method for processing a consistent LBT failure includes the following step.

Step 200: A first terminal triggers a sidelink consistent listen before talk LBT failure, and in a case that a first condition is met, cancels the sidelink consistent LBT failure, where
the first condition is used to determine whether a condition for canceling the sidelink consistent LBT failure is met.

This embodiment of this application provides a condition for UE to cancel a sidelink consistent LBT failure (sidelink consistent LBT failure) in SL-U. In a case that the terminal triggers the sidelink consistent LBT failure, if the first condition is met, the sidelink consistent LBT failure is canceled.

It should be noted that triggering the LBT failure is understood as triggering generation of an LBT failure event, and that canceling the LBT failure may be understood as canceling the LBT failure event.

In all solutions provided in this embodiment of this application, the canceling the sidelink consistent LBT failure may also be understood as:
canceling all sidelink consistent LBT failures;
canceling a sidelink consistent LBT failure on a resource at a resource granularity; or
if there is any triggered sidelink consistent LBT failure, canceling the sidelink consistent LBT failure.

It should be noted that the sidelink resource granularity mentioned in all the solutions provided in this embodiment of this application may be understood as a channel (channel), a resource block set (Resource Block set, RB set), a resource pool (resource pool), a bandwidth part (Bandwidth Part, BWP), a carrier (carrier), or any other resource granularity.

In this embodiment of this application, the terminal triggers the sidelink consistent listen before talk LBT failure, and in the case that the first condition is met, cancels the sidelink consistent LBT failure. Because the condition for canceling the sidelink consistent LBT failure by the terminal in SL-U is provided, the terminal can cancel the sidelink consistent LBT failure in a timely manner when the condition for canceling the sidelink consistent LBT failure is met, and resource utilization of the terminal is improved.

Optionally, the first condition includes at least one of the following:
(1) The first terminal sends first indication information to a network-side device or a second terminal, where the first indication information is used to indicate the sidelink consistent LBT failure triggered by the first terminal, or used to indicate a triggered sidelink consistent LBT failure on a resource at a first resource granularity.

It may be understood that when the first terminal indicates the triggered sidelink consistent LBT failure (sidelink consistent LBT failure) to the network-side device or the second terminal, the first terminal can cancel the sidelink consistent LBT failure.

Alternatively, when the terminal indicates the triggered sidelink consistent LBT failure on the resource at the first resource granularity to the network-side device or other SL UE, the first terminal cancels the sidelink consistent LBT failure.

Optionally, the first indication information is carried by DCI, a MAC CE, or RRC signaling.

Optionally, in a case that the first terminal sends the first indication information to the network-side device or the second terminal, the canceling the sidelink consistent LBT failure includes at least one of the following:
(a) canceling the triggered sidelink consistent LBT failure on the resource indicated by the first indication information;
(b) canceling all triggered sidelink consistent LBT failures; and
(c) canceling a triggered sidelink consistent LBT failure on a resource at a second resource granularity.

The second resource granularity may be the same as or different from the first resource granularity.

For example, if UE sends a MAC PDU to a base station, and the PDU includes a sidelink LBT failure MAC CE, a triggered sidelink consistent LBT failure on a resource indicated in the sidelink LBT failure MAC CE is canceled, or all triggered sidelink consistent LBT failures are canceled.

For another example, if UE indicates a sidelink consistent LBT failure to a base station by using RRC signaling, a triggered sidelink consistent LBT failure on a resource indicated by the RRC signaling is canceled; or all triggered sidelink consistent LBT failures are canceled.

A processing method for the UE to indicate a sidelink consistent LBT failure to other SL UE is similar, and is not described herein.

For another example, if the UE sends first indication information to the base station, where the first indication information indicates a triggered sidelink consistent LBT failure on a resource at the first resource granularity, a triggered sidelink consistent LBT failure on a resource at the second resource granularity is canceled.

In this embodiment of this application, the terminal triggers the sidelink consistent listen before talk LBT failure, and in a case that the terminal sends the first indication information to the network-side device or another terminal, the sidelink consistent LBT failure is canceled. This can improve resource utilization of the terminal.

(2) The first terminal has performed sidelink transmission, or the first terminal completes sidelink consistent LBT failure recovery.

It may be understood that if the first terminal has completed SL transmission or sidelink consistent LBT failure recovery, the first terminal subsequently does not need to perform any other action for the triggered consistent LBT failure.

In some embodiments, that the first terminal has performed sidelink transmission includes at least one of the following:
(a) The first terminal has performed sidelink transmission on the resource on which the sidelink consistent LBT failure is triggered.

In some embodiments, that the first terminal has performed sidelink transmission on the resource on which the sidelink consistent LBT failure is triggered includes:
the first terminal triggers a sidelink consistent LBT failure on a first resource at the first resource granularity, and/or triggers a sidelink consistent LBT failure on a second resource at the second resource granularity within the first resource, and has performed sidelink transmission on the first resource and/or the second resource, without canceling the sidelink consistent LBT failure on the first resource and/or the second resource.

For example, the UE triggers a sidelink consistent LBT failure on the first resource at the first resource granularity (channel/RB set/resource pool/BWP/carrier), and/or a sidelink consistent LBT failure occurs on the second resource at the second resource granularity (channel/RB set/resource pool/BWP/carrier) within the first resource, and the UE has completed sidelink transmission on the first resource and/or the second resource (for example, has performed sidelink transmission on the second resource at the second resource granularity within the first resource or on a third resource at the second resource granularity, that is, the third resource is a resource that is within the first resource and that is at the same resource granularity as the second resource), without canceling the sidelink consistent LBT failure on the first resource and/or the second resource.

(b) The first terminal has performed sidelink transmission on a resource at the second resource granularity within the resource at the first resource granularity on which the sidelink consistent LBT failure is triggered.

(c) The first terminal has performed sidelink transmission on a resource at a third resource granularity, where the resource at the third resource granularity includes the resource at the first resource granularity on which the sidelink consistent LBT failure is triggered.

Optionally, the first resource granularity is greater than or equal to the second resource granularity, and less than or equal to the third resource granularity.

(d) The first terminal has performed sidelink transmission on an exceptional pool, where the sidelink transmission indicates a sidelink consistent LBT failure.

Optionally, the sidelink transmission includes at least one of the following:
a physical sidelink shared channel PSSCH or a physical sidelink control channel PSCCH;
a sidelink synchronization signal block S-SSB or a physical sidelink broadcast channel PSBCH; and
a physical sidelink feedback channel PSFCH.

Optionally, in a case that the first terminal has performed sidelink transmission, the canceling the sidelink consistent LBT failure includes at least one of the following:
canceling the sidelink consistent LBT failure on the resource on which the sidelink consistent LBT failure is triggered;
canceling the sidelink consistent LBT failure on a resource indicated by the sidelink transmission; and
canceling all triggered sidelink consistent LBT failures.

In some embodiments, that the first terminal completes sidelink consistent LBT failure recovery includes:
the first terminal completes sidelink consistent LBT failure recovery on a fourth resource at the first resource granularity.

Optionally, the completing sidelink consistent LBT failure recovery includes at least one of the following:
having indicated the sidelink consistent LBT failure to the network-side device or the second terminal; and
having completed resource switching or resource reselection at the first resource granularity or the second resource granularity.

For example, if the first terminal has completed channel/RB set/resource pool/BWP/carrier switching or reselection, it is considered that the first terminal completes sidelink consistent LBT failure recovery.

Optionally, in a case that the first terminal completes sidelink consistent LBT failure recovery, the canceling the sidelink consistent LBT failure includes:
canceling a sidelink consistent LBT failure on the fourth resource.

In this embodiment of this application, the terminal triggers the sidelink consistent listen before talk LBT failure; and if the terminal has performed sidelink transmission or has completed sidelink consistent LBT failure recovery, the terminal cancels the sidelink consistent LBT failure. This can improve resource utilization of the terminal.

(3) The first terminal receives a radio resource control RRC reconfiguration message from the network-side device or the second terminal.

If the terminal receives the RRC reconfiguration message from the network-side device or the second terminal, the terminal cancels the sidelink consistent LBT failure.

Optionally, the canceling the sidelink consistent LBT failure may also be understood as canceling a sidelink consistent LBT failure on a resource at a resource granularity corresponding to information in the RRC reconfiguration message.

Optionally, the RRC reconfiguration message includes at least one of the following:
a sidelink transmission resource, for example, a carrier resource configuration, a BWP configuration, or a resource pool configuration;
a subcarrier spacing (Sub-Carrier Spacing, SCS) of the sidelink transmission resource; and
a first parameter related to the sidelink consistent LBT failure.

For example, the first parameter is sl-lbt-FailureRecoveryConfig. The RRC reconfiguration message includes sl-lbt-FailureRecoveryConfig, which indicates that sl-lbt-FailureRecoveryConfig is reconfigured.

For example, the UE cancels the sidelink consistent LBT failure in the following cases:
an SL-U transmission resource of the UE is reconfigured; or
a subcarrier spacing of an SL-U transmission resource of the UE is reconfigured; or
a first parameter related to the sidelink consistent LBT failure is reconfigured.

Optionally, the first parameter includes at least one of the following:
a maximum count value of an LBT counter used to determine that the sidelink consistent LBT failure is triggered; and
an LBT detection timer value used to determine that the sidelink consistent LBT failure is triggered.

Optionally, the canceling the sidelink consistent LBT failure includes at least one of the following:
canceling a triggered sidelink consistent LBT failure on a reconfigured sidelink transmission resource at the first resource granularity;
canceling triggered sidelink consistent LBT failures on all resources at the second resource granularity within a reconfigured sidelink transmission resource at the first resource granularity; and
canceling all triggered sidelink consistent LBT failures.

For example, if there is any triggered sidelink consistent LBT failure on the reconfigured resource (such as the RB set/resource pool/BWP/carrier), the sidelink consistent LBT failure on the reconfigured resource is canceled; or all triggered sidelink consistent LBT failures are canceled.

For another example, when sl-lbt-FailureRecoveryConfig of the UE is reconfigured, a sidelink consistent LBT failure on a resource at a resource granularity associated with sl-lbt-FailureRecoveryConfig is canceled; or all triggered sidelink consistent LBT failures are canceled.

In this embodiment of this application, the terminal triggers the sidelink consistent listen before talk LBT failure; and if the terminal receives the radio resource control RRC reconfiguration message from the network-side device or the second terminal, the sidelink consistent LBT failure is canceled. This can improve resource utilization of the terminal.

(4) First information of the first terminal is reconfigured by an upper layer, or the first terminal receives a radio resource control RRC reconfiguration message from the network-side device or the second terminal, where the RRC reconfiguration message includes the first information, and the upper layer is a layer above a layer that triggers an LBT failure.

It may be understood that in a case that the first information is reconfigured by the upper layer, the sidelink consistent LBT failure is canceled. Optionally, the canceling the sidelink consistent LBT failure may also be understood as canceling a sidelink consistent LBT failure on a resource at a resource granularity corresponding to the first information.

Optionally, the first information includes at least one of the following:
a sidelink transmission resource;
a subcarrier spacing of the sidelink transmission resource; and
a first parameter related to the sidelink consistent LBT failure.

For example, the UE cancels the sidelink consistent LBT failure in the following cases:
an SL-U transmission resource of the UE is reconfigured by an upper layer of the UE; or
a subcarrier spacing of an SL-U transmission resource of the UE is reconfigured by an upper layer of the UE; or
a first parameter related to the sidelink consistent LBT failure is reconfigured by an upper layer of the UE.

Optionally, the first parameter includes at least one of the following:
a maximum count value of an LBT counter used to determine that the sidelink consistent LBT failure is triggered; and
an LBT detection timer value used to determine that the sidelink consistent LBT failure is triggered.

Optionally, in a case that the first terminal receives the radio resource control RRC reconfiguration message from the network-side device or the second terminal, where the RRC reconfiguration message includes the first information, the sidelink consistent LBT failure is canceled.

Optionally, the canceling the sidelink consistent LBT failure includes at least one of the following:
canceling a triggered sidelink consistent LBT failure on a reconfigured sidelink transmission resource at the first resource granularity;
canceling triggered sidelink consistent LBT failures on all resources at the second resource granularity within a reconfigured sidelink transmission resource at the first resource granularity;
canceling all triggered sidelink consistent LBT failures; and
canceling the sidelink consistent LBT failure on the resource at the first resource granularity associated with the first information.

In this embodiment of this application, the terminal triggers the sidelink consistent listen before talk LBT failure; and if the first information of the terminal is reconfigured by the upper layer, or the terminal receives the RRC reconfiguration message from the network-side device or another terminal, and the RRC reconfiguration message includes the first information, the sidelink consistent LBT failure is canceled. This can improve resource utilization of the terminal.

(5) A first protocol layer of a PC5 link or a Uu link of the first terminal is reset.

Optionally, the first protocol layer includes at least one of the following: MAC/RLC/PDCP/SDAP.

Optionally, the first protocol layer may be a protocol layer on a PC5 interface between the UE and UE, or a protocol layer on a Uu interface between the UE and the base station.

For example, if the MAC layer, RLC layer, PDCP layer, or SDAP layer of the first terminal is reset, if there is any triggered sidelink consistent LBT failure, the sidelink consistent LBT failure is canceled.

Optionally, the canceling the sidelink consistent LBT failure in a case that the first protocol layer of the PC5 link or the Uu link of the first terminal is reset includes:
canceling a sidelink consistent LBT failure triggered at the first protocol layer.

The canceling a sidelink consistent LBT failure triggered at the first protocol layer includes: canceling all sidelink consistent LBT failures triggered at the first protocol layer.

In this embodiment of this application, the terminal triggers the sidelink consistent listen before talk LBT failure; and if the first protocol layer of the PC5 link or the Uu link of the terminal is reset, the sidelink consistent LBT failure is canceled. This can improve resource utilization of the terminal.

(6) The first terminal triggers a radio link failure RLF, or the first terminal receives an RRC release message, or the first terminal fails to perform RRC reestablishment.

Optionally, that the first terminal triggers the radio link failure RLF, or that the first terminal receives the RRC release message, or that the first terminal fails to perform RRC reestablishment includes at least one of the following:
the first terminal triggers the radio link failure RLF, or the first terminal receives the RRC release message, or the RRC reestablishment failure of the first terminal occurs on the PC5 link; or
the first terminal triggers the radio link failure RLF, or the first terminal receives the RRC release message, or the RRC reestablishment failure of the first terminal occurs on the Uu link.

Optionally, the canceling the sidelink consistent LBT failure in a case that the first terminal triggers the radio link failure RLF, or that the first terminal receives the RRC release message, or that the first terminal fails to perform RRC reestablishment includes:
if the first terminal triggers the radio link failure RLF, or the first terminal receives the RRC release message, or the RRC reestablishment failure of the first terminal occurs on the PC5 link, canceling all sidelink consistent LBT failures on the PC5 link; or
if the first terminal triggers the radio link failure RLF, or the first terminal receives the RRC release message, or the RRC reestablishment failure of the first terminal occurs on the Uu link, canceling all sidelink consistent LBT failures on the Uu link.

In some embodiments, if the UE triggers an RLF, a sidelink consistent LBT failure on a resource on which the RLF is triggered is canceled, or sidelink consistent LBT failures on all resources on the PC5 link are canceled, or all sidelink consistent LBT failures on the Uu link are canceled.

If the UE receives an RRC release message, a sidelink consistent LBT failure on a resource on which the RRC release message is received is canceled, or sidelink consistent LBT failures on all resources on the PC5 link are canceled, or all sidelink consistent LBT failures on the Uu link are canceled;
if an RRC reestablishment failure of the UE occurs on the PC5 link, sidelink consistent LBT failures on all resources on the PC5 link are canceled; or
if an RRC reestablishment failure of the UE occurs on the Uu link, all sidelink consistent LBT failures on the Uu link are canceled.

In this embodiment of this application, the terminal triggers the sidelink consistent listen before talk LBT failure; and if the terminal triggers the RLF, or receives the RRC release message, or fails to perform RRC reestablishment, the sidelink consistent LBT failure is canceled. This can improve resource utilization of the terminal.

(7) A resource allocation mode of the first terminal is switched.

For example, the UE cancels the sidelink consistent LBT failure in the following cases:
the UE switches from mode 1 to mode 2; or
the UE switches from mode 2 to mode 1.

Optionally, the first terminal may be UE in a connected state (CONNECTED), or may be UE switching from a connected state to an idle state (IDLE) or an inactive state (INACTIVE), or may be UE switching from an idle/inactive state to a connected state.

In this embodiment of this application, the terminal triggers the sidelink consistent listen before talk LBT failure; and if the resource allocation mode of the terminal is switched, the sidelink consistent LBT failure is canceled. This can improve resource utilization of the terminal.

(8) The first terminal does not select a first carrier when performing carrier selection.

It may be understood that if the UE does not select a carrier when the UE performs carrier selection, and if any sidelink consistent LBT failure is triggered on the carrier, the UE cancels the sidelink consistent LBT failure triggered on the carri er.

Optionally, that the first terminal does not select a first carrier when performing carrier selection includes at least one of the following:
the first terminal does not select the first carrier;
the first terminal detects that a CBR of the first carrier exceeds a first threshold; and
the first terminal deactivates the first carrier during carrier aggregation.

Optionally, the canceling the sidelink consistent LBT failure includes:
canceling a triggered sidelink consistent LBT failure on the first carrier.

In this embodiment of this application, the terminal triggers the sidelink consistent listen before talk LBT failure; and if the terminal does not select the first carrier when performing carrier selection, the sidelink consistent LBT failure on the first carrier is canceled. This can improve resource utilization of the terminal.

(9) The first terminal has completed cell reselection.

It may be understood that after the UE has completed cell reselection, the UE cancels the sidelink consistent LBT failure.

Optionally, that the first terminal has completed cell reselection includes at least one of the following:
the first terminal has completed cell reselection, and sidelink resources configured in a reselected cell are partially or completely different from sidelink resources configured in a serving cell before reselection; and
the first terminal has completed cell reselection, and the sidelink resources configured in the reselected cell do not include the resource on which the first terminal triggers the sidelink consistent LBT failure.

Optionally, the canceling the sidelink consistent LBT failure includes at least one of the following:
canceling the sidelink consistent LBT failure on the resource on which the sidelink consistent LBT failure is triggered; and
canceling all sidelink consistent LBT failures.

For example, the UE cancels the sidelink consistent LBT failure in the following cases:
the UE has completed cell reselection; or
the UE has completed cell reselection, and sidelink resources configured in a reselected cell are partially or completely different from sidelink resources configured in a serving cell before reselection; or
the UE has completed cell reselection, and the sidelink resources configured in the reselected cell do not include the resource on which the UE triggers the consistent LBT failure.

That the UE cancels the sidelink consistent LBT failure includes: if there is any triggered sidelink consistent LBT failure, canceling the sidelink consistent LBT failure; or canceling a sidelink consistent LBT failure on a resource on which the consistent LBT failure is triggered; or canceling all sidelink consistent LBT failures.

In this embodiment of this application, the terminal triggers the sidelink consistent listen before talk LBT failure; and if the terminal has completed cell reselection, the sidelink consistent LBT failure is canceled. This can improve resource utilization of the terminal.

In some embodiments of this application, the method further includes:
in a case that a second condition is met, the first terminal does not cancel the sidelink consistent LBT failure.

It may be understood that in some cases, the UE does not cancel the sidelink consistent LBT failure.

The second condition includes at least one of the following:
(1) The resource allocation mode of the first terminal is switched, but resources used by the first terminal after the switching remain unchanged.

It may be understood that if the UE switches from mode 1 to mode 2, or if the UE switches from mode 2 to mode 1, that is, if the resource allocation mode of the first terminal is switched, but the resources used by the UE remain unchanged after the switching, for example, the carrier remains unchanged, or the BWP remains unchanged, or the resource pool remains unchanged, the UE maintains the sidelink consistent LBT failure on the used resources.

(2) The sidelink transmission performed by the first terminal is the S-SSB, the PSFCH, or the physical sidelink broadcast channel PSBCH.

Optionally, after the UE triggers the consistent LBT failure, if the UE successfully performs the sidelink transmission and transmits the S-SSB, the PSFCH, or the PSBCH, the UE does not cancel the consistent LBT failure.

Optionally, the S-SSB is an S-SSB transmitted within or outside the resource on which the sidelink consistent LBT failure is triggered, or the PSFCH is a PSFCH transmitted within or outside the resource on which the sidelink consistent LBT failure is triggered, or the PSBCH is a PSBCH transmitted within or outside the resource on which the sidelink consistent LBT failure is triggered.

Optionally, the S-SSB, the PSFCH, or the PSBCH is an S-SSB, a PSFCH, or a PSBCH transmitted within or outside a resource at a resource granularity on which a consistent LBT failure is triggered.

(3) After the sidelink consistent LBT failure is triggered, the first terminal has completed cell reselection, and the sidelink resources configured in the reselected cell are completely the same as the sidelink resources configured in the serving cell before the reselection.

(4) After the sidelink consistent LBT failure is triggered, the first terminal has completed cell reselection, and the sidelink resources configured in the reselected cell include the resource on which the first terminal triggers the sidelink consistent LBT failure.

This embodiment of this application further provides several situations in which the sidelink consistent LBT failure is not canceled, which can avoid canceling the sidelink consistent LBT failure and improve communication quality of the terminal.

In some embodiments, before the first terminal triggers the sidelink consistent listen before talk LBT failure, the method further includes:
performing an LBT operation on resources of a plurality of consecutive slots, where
the first terminal determines that a channel access priority class CAPC value used for transmission on the resources of the plurality of consecutive slots is a CAPC value corresponding to a lowest priority among CAPC values of a plurality of transport blocks TBs.

For idle/inactive UE, if the UE uses multi-slot resources for transmission when performing sidelink transmission, the UE cannot obtain, from the base station, a CAPC value used for transmission on the multi-slot resources. In this case, the UE needs to determine a CAPC value for the transmission, to further determine physical layer parameters to be used for channel access.

One solution is: when the UE uses multi-slot resources for sidelink transmission, if a plurality of TBs are transmitted on the multi-slot resources, the UE determines that a CAPC value used for the multi-slot transmission is a CAPC value with a lowest priority among CAPC values of all TBs, that is, a largest CAPC value.

This embodiment of this application provides a method for the terminal to determine the CAPC value when the UE uses multi-slot resources for sidelink transmission, so that the terminal can further determine physical layer parameters for channel access and improve efficiency of channel access of the terminal.

Optionally, the first terminal meets at least one of the following:
the first terminal is a terminal using resource allocation mode 2;
the first terminal is in the idle state or the inactive state;
the first terminal is an out-of-coverage (Out-of-coverage, OOC) terminal; and
the plurality of transport blocks TBs include TBs for initial transmission and/or TBs for retransmission.

Optionally, the plurality of TBs are all TBs for initial transmission, or TBs for initial transmission and TBs for retransmission, or all TBs for retransmission.

The method for processing a consistent LBT failure according to this embodiment of this application may be performed by an apparatus for processing a consistent LBT failure. An apparatus for processing a consistent LBT failure according to an embodiment of this application is described by assuming that the method for processing a consistent LBT failure in this embodiment of this application is performed by the apparatus for processing a consistent LBT failure.

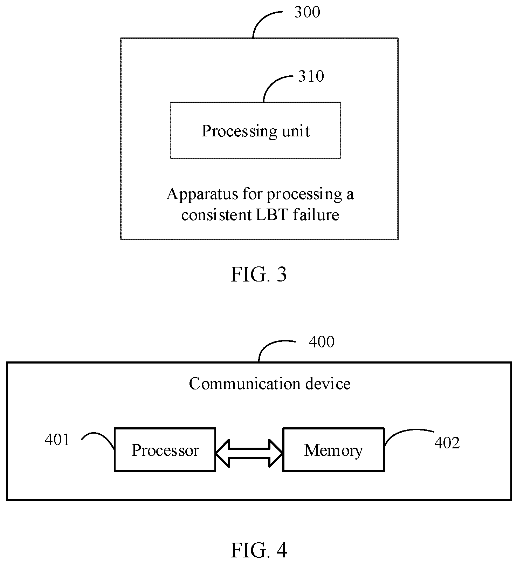

FIG. 3 is a schematic diagram of a structure of an apparatus for processing a consistent LBT failure according to an embodiment of this application. The apparatus for processing a consistent LBT failure is applied to a first terminal. As shown in FIG. 3, the apparatus 300 for processing a consistent LBT failure includes:
a processing unit 310, configured to trigger a sidelink consistent listen before talk LBT failure, and in a case that a first condition is met, cancel the sidelink consistent LBT failure, where
the first condition is used to determine whether a condition for canceling the sidelink consistent LBT failure is met.

Optionally, the first condition includes at least one of the following:
the first terminal sends first indication information to a network-side device or a second terminal, where the first indication information is used to indicate the sidelink consistent LBT failure triggered by the first terminal, or used to indicate a triggered sidelink consistent LBT failure on a resource at a first resource granularity;
the first terminal has performed sidelink transmission, or the first terminal completes sidelink consistent LBT failure recovery;
the first terminal receives a radio resource control RRC reconfiguration message from the network-side device or the second terminal;
first information of the first terminal is reconfigured by an upper layer, or the first terminal receives a radio resource control RRC reconfiguration message from the network-side device or the second terminal, where the RRC reconfiguration message includes the first information;
a first protocol layer of a PC5 link or a Uu link of the first terminal is reset;
the first terminal triggers a radio link failure RLF, or the first terminal receives an RRC release message, or the first terminal fails to perform RRC reestablishment;
a resource allocation mode of the first terminal is switched;
the first terminal does not select a first carrier when performing carrier selection; and
the first terminal has completed cell reselection.

Optionally, the first indication information is carried by DCI, a MAC CE, or RRC signaling.

Optionally, in a case that the first indication information is sent to the network-side device or the second terminal, the canceling the sidelink consistent LBT failure includes at least one of the following: canceling the triggered sidelink consistent LBT failure on the resource indicated by the first indication information; canceling all triggered sidelink consistent LBT failures; and canceling a sidelink consistent LBT failure on a resource at a second resource granularity.

Optionally, the having performed sidelink transmission includes at least one of the following: having performed sidelink transmission on the resource on which the sidelink consistent LBT failure is triggered; having performed sidelink transmission on a resource at a second resource granularity within the resource at the first resource granularity on which the sidelink consistent LBT failure is triggered; having performed sidelink transmission on a resource at a third resource granularity, where the resource at the third resource granularity includes the resource at the first resource granularity on which the sidelink consistent LBT failure is triggered; and having performed sidelink transmission on an exceptional pool, where the sidelink transmission indicates a sidelink consistent LBT failure.

Optionally, the having performed sidelink transmission on the resource on which the sidelink consistent LBT failure is triggered includes:
triggering a sidelink consistent LBT failure on a first resource at the first resource granularity, and/or triggering a sidelink consistent LBT failure on a second resource at the second resource granularity within the first resource, and having performed sidelink transmission on the first resource and/or the second resource, without canceling the sidelink consistent LBT failure on the first resource and/or the second resource.

Optionally, the sidelink transmission includes at least one of the following:
a physical sidelink shared channel PSSCH or a physical sidelink control channel PSCCH;
a sidelink synchronization signal block S-SSB or a physical sidelink broadcast channel PSBCH; and
a physical sidelink feedback channel PSFCH.

Optionally, the canceling the sidelink consistent LBT failure includes at least one of the following:
canceling the sidelink consistent LBT failure on the resource on which the sidelink consistent LBT failure is triggered;
canceling the sidelink consistent LBT failure on a resource indicated by the sidelink transmission; and
canceling all triggered sidelink consistent LBT failures.

Optionally, the completing sidelink consistent LBT failure recovery includes:
completing sidelink consistent LBT failure recovery on a fourth resource at the first resource granularity.

Optionally, the completing sidelink consistent LBT failure recovery includes at least one of the following:
having indicated the sidelink consistent LBT failure to the network-side device or the second terminal; and
having completed resource switching or resource reselection at the first resource granularity or the second resource granularity.

Optionally, the canceling the sidelink consistent LBT failure includes:
canceling a sidelink consistent LBT failure on the fourth resource.

Optionally, the first information includes at least one of the following:
a sidelink transmission resource;
a subcarrier spacing of the sidelink transmission resource; and
a first parameter related to the sidelink consistent LBT failure.

Optionally, the first parameter includes at least one of the following:
a maximum count value of an LBT counter used to determine that the sidelink consistent LBT failure is triggered; and
an LBT detection timer value used to determine that the sidelink consistent LBT failure is triggered.

Optionally, the canceling the sidelink consistent LBT failure includes at least one of the following:
canceling a triggered sidelink consistent LBT failure on a reconfigured sidelink transmission resource at the first resource granularity;
canceling triggered sidelink consistent LBT failures on all resources at the second resource granularity within a reconfigured sidelink transmission resource at the first resource granularity;
canceling all triggered sidelink consistent LBT failures; and
canceling the sidelink consistent LBT failure on the resource at the first resource granularity associated with the first information.

Optionally, the canceling the sidelink consistent LBT failure in a case that the first protocol layer of the PC5 link or the Uu link of the first terminal is reset includes:
canceling a sidelink consistent LBT failure triggered at the first protocol layer.

Optionally, the canceling the sidelink consistent LBT failure in a case that the radio link failure RLF is triggered, or that the RRC release message is received, or that the first terminal fails to perform RRC reestablishment includes:
if the radio link failure RLF is triggered, or the first terminal receives the RRC release message, or the RRC reestablishment failure of the first terminal occurs on the PC5 link, canceling all sidelink consistent LBT failures on the PC5 link; or
if the radio link failure RLF is triggered, or the first terminal receives the RRC release message, or the RRC reestablishment failure of the first terminal occurs on the Uu link, canceling all sidelink consistent LBT failures on the Uu link.

Optionally, the not selecting a first carrier when performing carrier selection includes at least one of the following:
not selecting the first carrier;
detecting that a CBR of the first carrier exceeds a first threshold; and
deactivating the first carrier during carrier aggregation.

Optionally, the canceling the sidelink consistent LBT failure includes:
canceling a triggered sidelink consistent LBT failure on the first carrier.

Optionally, the having completed cell reselection includes at least one of the following:
having completed cell reselection, and sidelink resources configured in a reselected cell are partially or completely different from sidelink resources configured in a serving cell before reselection; and
having completed cell reselection, and the sidelink resources configured in the reselected cell do not include the resource on which the first terminal triggers the sidelink consistent LBT failure.

Optionally, the canceling the sidelink consistent LBT failure includes at least one of the following:
canceling the sidelink consistent LBT failure on the resource on which the sidelink consistent LBT failure is triggered; and
canceling all sidelink consistent LBT failures.

Optionally, the method further includes:
in a case that a second condition is met, not canceling the sidelink consistent LBT failure, where
the second condition includes at least one of the following:
   the resource allocation mode is switched, but resources used after the switching remain unchanged;
   the performed sidelink transmission is the S-SSB, the PSFCH, or the physical sidelink broadcast channel PSBCH;
   after the sidelink consistent LBT failure is triggered, cell reselection has been completed, and the sidelink resources configured in the reselected cell are completely the same as the sidelink resources configured in the serving cell before the reselection; and
   after the sidelink consistent LBT failure is triggered, cell reselection has been completed, and the sidelink resources configured in the reselected cell include the resource on which the sidelink consistent LBT failure is triggered.

Optionally, the S-SSB is an S-SSB transmitted within or outside the resource on which the sidelink consistent LBT failure is triggered, or the PSFCH is a PSFCH transmitted within or outside the resource on which the sidelink consistent LBT failure is triggered, or the PSBCH is a PSBCH transmitted within or outside the resource on which the sidelink consistent LBT failure is triggered.

Optionally, the apparatus further includes:
an LBT listening unit, configured to perform an LBT operation on resources of a plurality of consecutive slots, where
it is determined that a channel access priority class CAPC value used for transmission on the resources of the plurality of consecutive slots is a CAPC value corresponding to a lowest priority among CAPC values of a plurality of transport blocks TBs.

Optionally, the first terminal meets at least one of the following:
the first terminal is a terminal using resource allocation mode 2;
the first terminal is in an idle state or an inactive state;
the first terminal is an out-of-coverage terminal; and
the plurality of transport blocks TBs include TBs for initial transmission and/or TBs for retransmission.

In this embodiment of this application, the terminal triggers the sidelink consistent listen before talk LBT failure, and in the case that the first condition is met, cancels the sidelink consistent LBT failure. Because the condition for canceling the sidelink consistent LBT failure by the terminal in SL-U is provided, the terminal can cancel the sidelink consistent LBT failure in a timely manner when the condition for canceling the sidelink consistent LBT failure is met, and resource utilization of the terminal is improved.

The apparatus for processing a consistent LBT failure in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

The apparatus for processing a consistent LBT failure according to this embodiment of this application can implement each process implemented in the method embodiment in FIG. 2, with the same technical effect achieved. To avoid repetition, details are not described herein again.

Optionally, as shown in FIG. 4, an embodiment of this application further provides a communication device 400, including a processor 401 and a memory 402. The memory 402 stores a program or instructions capable of running on the processor 401. For example, when the communication device 400 is a terminal, and the program or instructions are executed by the processor 401, the steps of the foregoing embodiment of the method for processing a consistent LBT failure are implemented, with the same technical effect achieved.

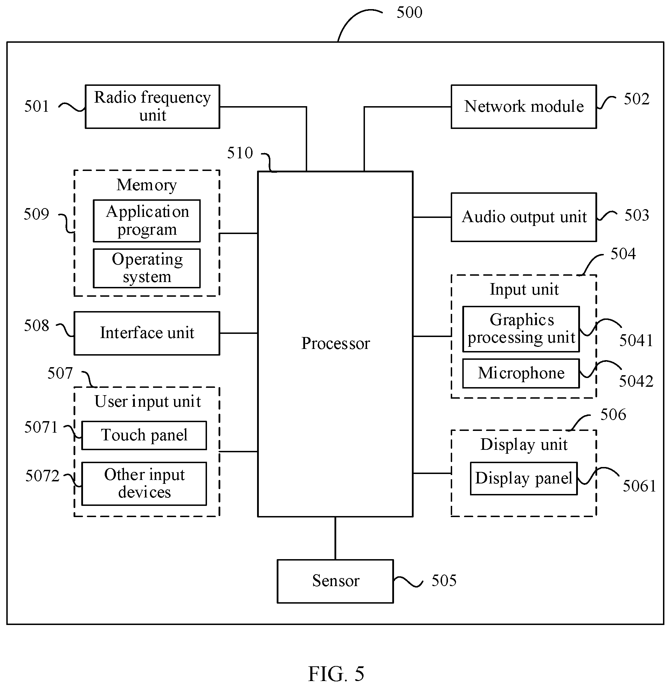

An embodiment of this application further provides a first terminal, including a processor and a communication interface. The processor is configured to trigger a sidelink consistent listen before talk LBT failure, and in a case that a first condition is met, cancel the sidelink consistent LBT failure, where the first condition is used to determine whether a condition for canceling the sidelink consistent LBT failure is met. The first terminal embodiment corresponds to the foregoing method embodiment on the first terminal side, and each implementation process and implementation of the foregoing method embodiment can be applied to the terminal embodiment, with the same technical effect achieved. Specifically, FIG. 5 is a schematic diagram of a hardware structure of a first terminal for implementing an embodiment of this application.

The first terminal 500 includes but is not limited to at least some components such as a radio frequency unit 501, a network module 502, an audio output unit 503, an input unit 504, a sensor 505, a display unit 506, a user input unit 507, an interface unit 508, a memory 509, and a processor 510.

A person skilled in the art may understand that the first terminal 500 may further include a power supply (for example, a battery) supplying power to all components. The power supply may be logically connected to the processor 510 through a power management system. In this way, functions such as charge management, discharge management, and power consumption management are implemented by using the power management system. The structure of the first terminal shown in FIG. 5 does not constitute a limitation on the first terminal. The first terminal may include more or fewer components than those shown in the figure, or some components are combined, or component arrangements are different. Details are not described herein again.

It should be understood that, in this embodiment of this application, the input unit 504 may include a graphics processing unit (Graphics Processing Unit, GPU) 5041 and a microphone 5042. The graphics processing unit 5041 processes image data of a still picture or video obtained by an image capture apparatus (such as a camera) in a video capture mode or an image capture mode. The display unit 506 may include a display panel 5061, and the display panel 5061 may be configured in a form of a liquid crystal display, an organic light-emitting diode, or the like. The user input unit 507 includes at least one of a touch panel 5071 and other input devices 5072. The touch panel 5071 is also referred to as a touchscreen. The touch panel 5071 may include two parts: a touch detection apparatus and a touch controller. The other input devices 5072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 501 may transmit the downlink data to the processor 510 for processing. In addition, the radio frequency unit 501 may send uplink data to the network-side device. Usually, the radio frequency unit 501 includes but is not limited to an antenna, an amplifier, a transceiver, a coupler, a low noise amplifier, a duplexer, and the like.

The memory 509 may be configured to store software programs or instructions and various data. The memory 509 may primarily include a first storage area for storing programs or instructions and a second storage area for storing data. The first storage area may store an operating system, an application program or instructions required by at least one function (such as an audio play function and an image play function), and the like. In addition, the memory 509 may include a volatile memory or a non-volatile memory, or the memory 509 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DRRAM). The memory 509 in this embodiment of this application includes but is not limited to these and any other suitable types of memories.

The processor 510 may include one or more processing units. Optionally, the processor 510 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively be not integrated in the processor 510.

The processor 510 is configured to trigger a sidelink consistent listen before talk LBT failure, and in a case that a first condition is met, cancel the sidelink consistent LBT failure, where the first condition is used to determine whether a condition for canceling the sidelink consistent LBT failure is met.

Optionally, the first condition includes at least one of the following:
the first terminal sends first indication information to a network-side device or a second terminal, where the first indication information is used to indicate the sidelink consistent LBT failure triggered by the first terminal, or used to indicate a triggered sidelink consistent LBT failure on a resource at a first resource granularity;
the first terminal has performed sidelink transmission, or the first terminal completes sidelink consistent LBT failure recovery;
the first terminal receives a radio resource control RRC reconfiguration message from the network-side device or the second terminal;
first information of the first terminal is reconfigured by an upper layer, or the first terminal receives a radio resource control RRC reconfiguration message from the network-side device or the second terminal, where the RRC reconfiguration message includes the first information;
a first protocol layer of a PC5 link or a Uu link of the first terminal is reset;
the first terminal triggers a radio link failure RLF, or the first terminal receives an RRC release message, or the first terminal fails to perform RRC reestablishment;
a resource allocation mode of the first terminal is switched;
the first terminal does not select a first carrier when performing carrier selection; and
the first terminal has completed cell reselection.

Optionally, the first indication information is carried by DCI, a MAC CE, or RRC signaling.

Optionally, in a case that the first terminal sends the first indication information to the network-side device or the second terminal, the canceling the sidelink consistent LBT failure includes at least one of the following:
canceling the triggered sidelink consistent LBT failure on the resource indicated by the first indication information;
canceling all triggered sidelink consistent LBT failures; and
canceling a sidelink consistent LBT failure on a resource at a second resource granularity.

Optionally, that the first terminal has performed sidelink transmission includes at least one of the following:
the first terminal has performed sidelink transmission on the resource on which the sidelink consistent LBT failure is triggered;
the first terminal has performed sidelink transmission on a resource at a second resource granularity within the resource at the first resource granularity on which the sidelink consistent LBT failure is triggered;
the first terminal has performed sidelink transmission on a resource at a third resource granularity, where the resource at the third resource granularity includes the resource at the first resource granularity on which the sidelink consistent LBT failure is triggered; and
the first terminal has performed sidelink transmission on an exceptional pool, where the sidelink transmission indicates a sidelink consistent LBT failure.

Optionally, that the first terminal has performed sidelink transmission on the resource on which the sidelink consistent LBT failure is triggered includes:
the first terminal triggers a sidelink consistent LBT failure on a first resource at the first resource granularity, and/or triggers a sidelink consistent LBT failure on a second resource at the second resource granularity within the first resource, and has performed sidelink transmission on the first resource and/or the second resource, without canceling the sidelink consistent LBT failure on the first resource and/or the second resource.

Optionally, the sidelink transmission includes at least one of the following:
a physical sidelink shared channel PSSCH or a physical sidelink control channel PSCCH;
a sidelink synchronization signal block S-SSB or a physical sidelink broadcast channel PSBCH; and
a physical sidelink feedback channel PSFCH.

Optionally, the canceling the sidelink consistent LBT failure includes at least one of the following:
canceling the sidelink consistent LBT failure on the resource on which the sidelink consistent LBT failure is triggered;
canceling the sidelink consistent LBT failure on a resource indicated by the sidelink transmission; and
canceling all triggered sidelink consistent LBT failures.

Optionally, that the first terminal completes sidelink consistent LBT failure recovery includes:
the first terminal completes sidelink consistent LBT failure recovery on a fourth resource at the first resource granularity.

Optionally, the completing sidelink consistent LBT failure recovery includes at least one of the following:
having indicated the sidelink consistent LBT failure to the network-side device or the second terminal; and
having completed resource switching or resource reselection at the first resource granularity or the second resource granularity.

Optionally, the canceling the sidelink consistent LBT failure includes:
canceling a sidelink consistent LBT failure on the fourth resource.

Optionally, the first information includes at least one of the following:
a sidelink transmission resource;
a subcarrier spacing of the sidelink transmission resource; and
a first parameter related to the sidelink consistent LBT failure.

Optionally, the first parameter includes at least one of the following:
a maximum count value of an LBT counter used to determine that the sidelink consistent LBT failure is triggered; and
an LBT detection timer value used to determine that the sidelink consistent LBT failure is triggered.

Optionally, the canceling the sidelink consistent LBT failure includes at least one of the following:
canceling a triggered sidelink consistent LBT failure on a reconfigured sidelink transmission resource at the first resource granularity;
canceling triggered sidelink consistent LBT failures on all resources at the second resource granularity within a reconfigured sidelink transmission resource at the first resource granularity;
canceling all triggered sidelink consistent LBT failures; and
canceling the sidelink consistent LBT failure on the resource at the first resource granularity associated with the first information.

Optionally, the canceling the sidelink consistent LBT failure in a case that the first protocol layer of the PC5 link or the Uu link of the first terminal is reset includes:
canceling a sidelink consistent LBT failure triggered at the first protocol layer.

Optionally, the canceling the sidelink consistent LBT failure in a case that the first terminal triggers the radio link failure RLF, or that the first terminal receives the RRC release message, or that the first terminal fails to perform RRC reestablishment includes:
if the first terminal triggers the radio link failure RLF, or the first terminal receives the RRC release message, or the RRC reestablishment failure of the first terminal occurs on the PC5 link, canceling all sidelink consistent LBT failures on the PC5 link; or
if the first terminal triggers the radio link failure RLF, or the first terminal receives the RRC release message, or the RRC reestablishment failure of the first terminal occurs on the Uu link, canceling all sidelink consistent LBT failures on the Uu link.

Optionally, that the first terminal does not select a first carrier when performing carrier selection includes at least one of the following:
the first terminal does not select the first carrier;
the first terminal detects that a CBR of the first carrier exceeds a first threshold; and
the first terminal deactivates the first carrier during carrier aggregation.

Optionally, the canceling the sidelink consistent LBT failure includes:
canceling a triggered sidelink consistent LBT failure on the first carrier.

Optionally, that the first terminal has completed cell reselection includes at least one of the following:
the first terminal has completed cell reselection, and sidelink resources configured in a reselected cell are partially or completely different from sidelink resources configured in a serving cell before reselection; and
the first terminal has completed cell reselection, and the sidelink resources configured in the reselected cell do not include the resource on which the first terminal triggers the sidelink consistent LBT failure.

Optionally, the canceling the sidelink consistent LBT failure includes at least one of the following:
canceling the sidelink consistent LBT failure on the resource on which the sidelink consistent LBT failure is triggered; and
canceling all sidelink consistent LBT failures.

Optionally, the processor 510 is further configured to:
in a case that a second condition is met, skip canceling the sidelink consistent LBT failure, where
the second condition includes at least one of the following:
   the resource allocation mode of the first terminal is switched, but resources used by the first terminal after the switching remain unchanged;
   the sidelink transmission performed by the first terminal is the S-SSB, the PSFCH, or the physical sidelink broadcast channel PSBCH;
   after the sidelink consistent LBT failure is triggered, the first terminal has completed cell reselection, and the sidelink resources configured in the reselected cell are completely the same as the sidelink resources configured in the serving cell before the reselection; and
   after the sidelink consistent LBT failure is triggered, the first terminal has completed cell reselection, and the sidelink resources configured in the reselected cell include the resource on which the first terminal triggers the sidelink consistent LBT failure.

Optionally, the S-SSB is an S-SSB transmitted within or outside the resource on which the sidelink consistent LBT failure is triggered, or the PSFCH is a PSFCH transmitted within or outside the resource on which the sidelink consistent LBT failure is triggered, or the PSBCH is a PSBCH transmitted within or outside the resource on which the sidelink consistent LBT failure is triggered.

Optionally, before the first terminal triggers the sidelink consistent listen before talk LBT failure, the method further includes:
performing an LBT operation on resources of a plurality of consecutive slots, where
the first terminal determines that a channel access priority class CAPC value used for transmission on the resources of the plurality of consecutive slots is a CAPC value corresponding to a lowest priority among CAPC values of a plurality of transport blocks TBs.

Optionally, the first terminal meets at least one of the following:
the first terminal is a terminal using resource allocation mode 2;
the first terminal is in an idle state or an inactive state;
the first terminal is an out-of-coverage terminal; and
the plurality of transport blocks TBs include TBs for initial transmission and/or TBs for retransmission.

In this embodiment of this application, the terminal triggers the sidelink consistent listen before talk LBT failure, and in the case that the first condition is met, cancels the sidelink consistent LBT failure. Because the condition for canceling the sidelink consistent LBT failure by the terminal in SL-U is provided, the terminal can cancel the sidelink consistent LBT failure in a timely manner when the condition for canceling the sidelink consistent LBT failure is met, and resource utilization of the terminal is improved.

An embodiment of this application further provides a readable storage medium. The readable storage medium stores a program or instructions. When the program or instructions are executed by a processor, each process of the foregoing embodiment of the method for processing a consistent LBT failure is implemented, with the same technical effect achieved. To avoid repetition, details are not described herein again.

The processor is the processor in the first terminal in the foregoing embodiment. The readable storage medium includes a computer-readable storage medium, such as a computer read-only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instructions to implement each process of the foregoing embodiment of the method for processing a consistent LBT failure, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each process of the foregoing embodiment of the method for processing a consistent LBT failure, with the same technical effect achieved. To avoid repetition, details are not described herein again.

An embodiment of this application further provides a communication system, including a first terminal, a network-side device, or a second terminal. The first terminal may be configured to perform each process of the foregoing embodiment of the method for processing a consistent LBT failure, with the same technical effect achieved. To avoid repetition, details are not described herein again.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a first terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A method for processing a consistent LBT failure, comprising:
triggering, by a first terminal, a sidelink consistent listen before talk LBT failure, and in a case that a first condition is met, canceling the sidelink consistent LBT failure, wherein
the first condition is used to determine whether a condition for canceling the sidelink consistent LBT failure is met.

2. The method according to claim 1, wherein the first condition comprises at least one of the following:
the first terminal sends first indication information to a network-side device or a second terminal, wherein the first indication information is used to indicate the sidelink consistent LBT failure triggered by the first terminal, or used to indicate a triggered sidelink consistent LBT failure on a resource at a first resource granularity;
the first terminal has performed sidelink transmission, or the first terminal completes sidelink consistent LBT failure recovery;
the first terminal receives a radio resource control RRC reconfiguration message from the network-side device or the second terminal;
first information of the first terminal is reconfigured by an upper layer, or the first terminal receives a radio resource control RRC reconfiguration message from the network-side device or the second terminal, wherein the RRC reconfiguration message comprises the first information, and the upper layer is a layer above a layer that triggers an LBT failure;
a first protocol layer of a PC5 link or a Uu link of the first terminal is reset;
the first terminal triggers a radio link failure RLF, or the first terminal receives an RRC release message, or the first terminal fails to perform RRC reestablishment;
a resource allocation mode of the first terminal is switched;
the first terminal does not select a first carrier when performing carrier selection; and
the first terminal has completed cell reselection.

3. The method according to claim 2, wherein the first indication information is carried by downlink control information DCI, a media access control control element MAC CE, or RRC signaling.

4. The method according to claim 2 or 3, wherein in a case that the first terminal sends the first indication information to the network-side device or the second terminal, the canceling the sidelink consistent LBT failure comprises at least one of the following:
canceling the triggered sidelink consistent LBT failure on the resource indicated by the first indication information;
canceling all triggered sidelink consistent LBT failures; and
canceling a triggered sidelink consistent LBT failure on a resource at a second resource granularity.

5. The method according to claim 2, wherein that the first terminal has performed sidelink transmission comprises at least one of the following:
the first terminal has performed sidelink transmission on the resource on which the sidelink consistent LBT failure is triggered;
the first terminal has performed sidelink transmission on a resource at a second resource granularity within the resource at the first resource granularity on which the sidelink consistent LBT failure is triggered;
the first terminal has performed sidelink transmission on a resource at a third resource granularity, wherein the resource at the third resource granularity comprises the resource at the first resource granularity on which the sidelink consistent LBT failure is triggered; and
the first terminal has performed sidelink transmission on an exceptional pool, wherein the sidelink transmission indicates the sidelink consistent LBT failure.

6. The method according to claim 5, wherein that the first terminal has performed sidelink transmission on the resource on which the sidelink consistent LBT failure is triggered comprises:
the first terminal triggers a sidelink consistent LBT failure on a first resource at the first resource granularity, and/or triggers a sidelink consistent LBT failure on a second resource at the second resource granularity within the first resource, and has performed sidelink transmission on the first resource and/or the second resource, without canceling the sidelink consistent LBT failure on the first resource and/or the second resource.

7. The method according to claim 5 or 6, wherein the sidelink transmission comprises at least one of the following:
a physical sidelink shared channel PSSCH or a physical sidelink control channel PSCCH;
a sidelink synchronization signal block S-SSB or a physical sidelink broadcast channel PSBCH; and
a physical sidelink feedback channel PSFCH.

8. The method according to any one of claims 5 to 7, wherein the canceling the sidelink consistent LBT failure comprises at least one of the following:
canceling the sidelink consistent LBT failure on the resource on which the sidelink consistent LBT failure is triggered;
canceling the sidelink consistent LBT failure on a resource indicated by the sidelink transmission; and
canceling all triggered sidelink consistent LBT failures.

9. The method according to claim 2, wherein that the first terminal completes sidelink consistent LBT failure recovery comprises:
the first terminal completes sidelink consistent LBT failure recovery on a fourth resource at the first resource granularity.

10. The method according to claim 9, wherein the completing sidelink consistent LBT failure recovery comprises at least one of the following:
having indicated the sidelink consistent LBT failure to the network-side device or the second terminal; and
having completed resource switching or resource reselection at the first resource granularity or the second resource granularity.

11. The method according to claim 9 or 10, wherein the canceling the sidelink consistent LBT failure comprises:
canceling a sidelink consistent LBT failure on the fourth resource.

12. The method according to claim 2, wherein the first information comprises at least one of the following:
a sidelink transmission resource;
a subcarrier spacing of the sidelink transmission resource; and
a first parameter related to the sidelink consistent LBT failure.

13. The method according to claim 12, wherein the first parameter comprises at least one of the following:
a maximum count value of an LBT counter used to determine that the sidelink consistent LBT failure is triggered; and
an LBT detection timer value used to determine that the sidelink consistent LBT failure is triggered.

14. The method according to claim 12 or 13, wherein the canceling the sidelink consistent LBT failure comprises at least one of the following:
canceling a triggered sidelink consistent LBT failure on a reconfigured sidelink transmission resource at the first resource granularity;
canceling triggered sidelink consistent LBT failures on all resources at the second resource granularity within a reconfigured sidelink transmission resource at the first resource granularity;
canceling all triggered sidelink consistent LBT failures; and
canceling the sidelink consistent LBT failure on the resource at the first resource granularity associated with the first information.

15. The method according to claim 2, wherein the canceling the sidelink consistent LBT failure in a case that the first protocol layer of the PC5 link or the Uu link of the first terminal is reset comprises:
canceling a sidelink consistent LBT failure triggered at the first protocol layer.

16. The method according to claim 2, wherein the canceling the sidelink consistent LBT failure in a case that the first terminal triggers the radio link failure RLF, or that the first terminal receives the RRC release message, or that the first terminal fails to perform RRC reestablishment comprises:
if the first terminal triggers the radio link failure RLF, or the first terminal receives the RRC release message, or the RRC reestablishment failure of the first terminal occurs on the PC5 link, canceling all sidelink consistent LBT failures on the PC5 link; or
if the first terminal triggers the radio link failure RLF, or the first terminal receives the RRC release message, or the RRC reestablishment failure of the first terminal occurs on the Uu link, canceling all sidelink consistent LBT failures on the Uu link.

17. The method according to claim 2, wherein that the first terminal does not select a first carrier when performing carrier selection comprises at least one of the following:
the first terminal does not select the first carrier;
the first terminal detects that a CBR of the first carrier exceeds a first threshold; and
the first terminal deactivates the first carrier during carrier aggregation.

18. The method according to claim 17, wherein the canceling the sidelink consistent LBT failure comprises:
canceling a triggered sidelink consistent LBT failure on the first carrier.

19. The method according to claim 2, wherein that the first terminal has completed cell reselection comprises at least one of the following:
the first terminal has completed cell reselection, and sidelink resources configured in a reselected cell are partially or completely different from sidelink resources configured in a serving cell before reselection; and
the first terminal has completed cell reselection, and the sidelink resources configured in the reselected cell do not comprise the resource on which the first terminal triggers the sidelink consistent LBT failure.

20. The method according to claim 19, wherein the canceling the sidelink consistent LBT failure comprises at least one of the following:
canceling the sidelink consistent LBT failure on the resource on which the sidelink consistent LBT failure is triggered; and
canceling all sidelink consistent LBT failures.

21. The method according to any one of claims 2 to 20, wherein the method further comprises:
in a case that a second condition is met, not canceling, by the first terminal, the sidelink consistent LBT failure, wherein
the second condition comprises at least one of the following:
the resource allocation mode of the first terminal is switched, but resources used by the first terminal after the switching remain unchanged;
the sidelink transmission performed by the first terminal is the S-SSB, the PSFCH, or the physical sidelink broadcast channel PSBCH;
after the sidelink consistent LBT failure is triggered, the first terminal has completed cell reselection, and the sidelink resources configured in the reselected cell are completely the same as the sidelink resources configured in the serving cell before the reselection; and
after the sidelink consistent LBT failure is triggered, the first terminal has completed cell reselection, and the sidelink resources configured in the reselected cell comprise the resource on which the first terminal triggers the sidelink consistent LBT failure.

22. The method according to claim 21, wherein the S-SSB is an S-SSB transmitted within or outside the resource on which the sidelink consistent LBT failure is triggered, or the PSFCH is a PSFCH transmitted within or outside the resource on which the sidelink consistent LBT failure is triggered, or the PSBCH is a PSBCH transmitted within or outside the resource on which the sidelink consistent LBT failure is triggered.

23. The method according to any one of claims 1 to 22, wherein before the triggering, by a first terminal, a sidelink consistent listen before talk LBT failure, the method further comprises:
performing an LBT operation on resources of a plurality of consecutive slots, wherein
the first terminal determines that a channel access priority class CAPC value used for transmission on the resources of the plurality of consecutive slots is a CAPC value corresponding to a lowest priority among CAPC values of a plurality of transport blocks TBs.

24. The method according to claim 23, wherein the first terminal meets at least one of the following:
the first terminal is a terminal using resource allocation mode 2;
the first terminal is in an idle state or an inactive state;
the first terminal is an out-of-coverage OOC terminal; and
the plurality of transport blocks TBs comprise TBs for initial transmission and/or TBs for retransmission.

25. An apparatus for processing a consistent LBT failure, comprising:
a processing unit, configured to trigger a sidelink consistent listen before talk LBT failure, and in a case that a first condition is met, cancel the sidelink consistent LBT failure, wherein
the first condition is used to determine whether a condition for canceling the sidelink consistent LBT failure is met.

26. A terminal, comprising a processor and a memory, wherein the memory stores a program or instructions capable of running on the processor, and when the program or instructions are executed by the processor, the steps of the method for processing a consistent LBT failure according to any one of claims 1 to 24 are implemented.

27. A readable storage medium, wherein the readable storage medium stores a program or instructions, and when the program or instructions are executed by a processor, the steps of the method for processing a consistent LBT failure according to any one of claims 1 to 24 are implemented.

28. A computer program product, wherein the computer program product is stored in a storage medium, and the computer program product is executed by at least one processor to implement the method for processing a consistent LBT failure according to any one of claims 1 to 24.

29. A chip, wherein the chip comprises a processor and a communication interface, the communication interface is coupled to the processor, and the processor is configured to run a program or instructions to implement the method for processing a consistent LBT failure according to any one of claims 1 to 24.
